# EUROPÄISCHE PATENTANMELDUNG

(11) **EP 1 457 879 A2**
(43) Veröffentlichungstag der Anmeldung: **15.09.2004**
(21) Anmeldenummer: 04100705.5
(22) Anmeldetag: 23.02.2004
(51) Int. Cl.: G06F 9/44, G06F 9/45

(54) **Rechenvorrichtung mit zwei nichtflüchtigen Speichern; einer, um Programmcodes zu speichern, der andere, um Speicheradressen zu speichern**

(30) Priorität: 10.03.2003 DE 10310290
(71) Anmelder: ROBERT BOSCH GMBH, 70442 Stuttgart (DE)
(72) Erfinder: Schmedding, Rainer, 31135, Hildesheim (DE); Knopke, Juergen, 32427, Minden-Rodenbeck (DE); Strake, Engelbert, 31139, Hildesheim (DE)

(57) **Zusammenfassung**

Es wird eine Rechenvorrichtung vorgeschlagen, die einen Speicher mit unmittelbar von einem Prozessor aus ausführbarem Programmcode aufweist. Zur Ausführung dieses Programmcodes ist ein zweiter Speicher vorgesehen, der veränderbare Adressen zum Aufruf der einzelnen Programmcodeabschnitte in dem ersten Speicher enthält.

## Beschreibung

### Stand der Technik

Die Erfindung geht aus von einer Rechenvorrichtung nach der Gattung des Hauptanspruchs. Es sind schon Rechenvorrichtungen bekannt, für die Programme zur Ausführung durch die Rechenvorrichtung auf einem Festplattenspeicher abgelegt sind. Soll ein Programm ausgeführt werden, wird der Programmcode aus dem Festplattenspeicher in einen Arbeitsspeicher kopiert und dabei möglicherweise decodiert. Das Programm wird anschließend in der Weise ausgeführt, dass der in dem vorzugsweise als ein flüchtiger Speicher ausgeführten Arbeitsspeicher vorliegende Code durch den Prozessor abgearbeitet wird. Unter Programmcode ist hierbei eine Abfolge von Befehlen zu verstehen, die ein Prozessor ausführt, um eine bestimmte Aufgabe zu erledigen. Nicht für jede Anwendung, insbesondere im mobilen Betrieb, ist jedoch ein derartiger Festplattenspeicher sinnvoll. Deshalb sind auch Lösungen bekannt, bei denen der Programmcode in einen nichtflüchtigen Speicher eingeschrieben und von diesem aus in den Arbeitsspeicher kopiert wird. Um die Größe des Arbeitsspeichers reduzieren zu können bzw. um gegebenenfalls ganz auf einen Arbeitsspeicher zu verzichten, ist es ferner bekannt, den Programmcode so auf dem nichtflüchtigen Speicher abzulegen, dass er von dort direkt ausgeführt werden kann. Der Programmcode ist hierzu im Allgemeinen nicht komprimiert abzulegen. Ferner muss der nichtflüchtige Speicher direkt adressierbar sein, so dass ein unmittelbarer Zugriff auf den Programmcode erfolgen kann. Hierzu sind Rechenvorrichtungen bekannt, bei denen in dem nichtflüchtigen Speicher die Speicheradressen für Programmcodeabschnitte mit abgelegt sind. Wird das in dem nichtflüchtigen Speicher abgelegte Programm gestartet, werden die einzelnen Programmabschnitte entsprechend den fest abgespeicherten Adressen abgearbeitet. Die Anzahl und die Adresslagen der verschiedenen Codeblöcke müssen bei der Erstellung bzw. bei einem Beschreiben des nichtflüchtigen Speichers bekannt sein. Spätere Änderungen einer Anzahl oder einer Adresslage der einzelnen Programmcodeblöcke in dem nichtflüchtigen Speicher können dabei nicht mehr berücksichtigt werden. Vielmehr ist es erforderlich, auch bei gegebenenfalls minimalen Änderungen den gesamten Programmcode neu zu erzeugen und dabei die Adressen für die einzelnen Programmblöcke anzupassen. Hierdurch werden nachfolgende Aktualisierungen der in dem ersten Speicher abgelegten Programme erschwert.

### Vorteile der Erfindung

Die erfindungsgemäße Rechenvorrichtung mit den Merkmalen des Hauptanspruchs hat demgegenüber den Vorteil, dass ein zweiter nichtflüchtiger Speicher vorgesehen ist, in dem die Adressen der Programmblöcke in dem ersten Speicher abgelegt sind. Wird nun die Lage, die Größe oder die Anzahl von Codeblöcken in dem ersten Speicher geändert, so ist es lediglich erforderlich, die entsprechende Adresse in dem zweiten nichtflüchtigen Speicher zu ändern. Hierdurch ist eine Änderung des Programmcodes in dem ersten nichtflüchtigen Speicher möglich, ohne den gesamten Speicherinhalt des ersten Speichers zu erneuern. Ein Aktualisieren, Ergänzen und/oder Austauschen von Programmcodekomponenten in dem ersten nichtflüchtigen Speicher wird hierdurch erleichtert. Insbesondere kann auf ein zumeist zeitaufwändiges Neuerstellen des Gesamtprogrammbestands verzichtet werden. Gegebenenfalls kann eine Aktualisierung bereits dadurch erfolgen, dass der Adresseintrag geändert wird, wenn in dem nichtflüchtigen Speicher mehrere Versionen eines Programmteiles bereits vorab abgelegt sind. Durch ein Umschalten mittels einer Adressänderung in dem zweiten nichtflüchtigen, aber überschreibbaren Speicher kann von einer ersten Version auf eine zweite Version der entsprechenden Programmteile gewechselt werden. Dabei ist es nicht erforderlich, Startadressen in dem ersten nichtflüchtigen Speicher abzulegen, sondern es muss lediglich eine Startadresse für den zweiten nichtflüchtigen Speicher bekannt sein. Zudem ist ein Zugriff auf die Programmcodeadressen sowohl während des Ablaufs eines Programms, als auch während einer Aktualisierung in Folge der gesonderten Ablage in dem zweiten Speicher schnell möglich.

Durch die in den Unteransprüchen aufgeführten Maßnahmen sind vorteilhafte Weiterbildungen und Verbesserungen der im Hauptanspruch angegebenen Rechenvorrichtung möglich. Besonders vorteilhaft ist, eine Reihenfolge der Abarbeitung des Programmcodes durch eine Reihenfolge der in dem zweiten Speicher abgelegten Codeadressen vorzugeben. Auf eine gesonderte Ablage einer Bearbeitungsreihenfolge in dem ersten Speicher kann hierdurch verzichtet werden. Zudem lässt sich durch Änderung der in dem zweiten Speicher abgelegten Adressdaten auch die Abarbeitungsreihenfolge problemlos ändern.

Ferner ist vorteilhaft, den Programmcode in einzelnen Paketen in dem ersten Speicher abzulegen, so dass ein Austausch dieser einzelnen Codepakete möglich ist. Ferner ist vorteilhaft, einen Wert einer Startadresse vorzugeben, der auf kein Codepaket verweist, sondern bei dem ein Zugriff auf den ersten Speicher unterbleibt. Hierdurch kann gezielt der Zugriff auf ein Codepaket abgeschaltet werden, während der Zugriff auf die anderen Codepakete unverändert erfolgt und ohne dass eine Änderung der anderen Startadressen in dem zweiten nichtflüchtigen Speicher erforderlich wird. Zudem ist es durch eine derartige Aktivierung nicht erforderlich, auch in dem ersten Speicher bei einer Deaktivierung eines Programmcodeblocks eine Änderung vorzunehmen.

Ferner ist vorteilhaft, den ersten Speicher aus mehreren Bauteilen zu bilden, so dass die einzelnen Speicherbauteile unabhängig voneinander ausgetauscht werden können.

Ferner ist vorteilhaft, dass die Inhalte der Speicherzellen bei einem Datenverlust, zum Beispiel durch eine Überspannung oder durch einen Spannungsabfall bei einer Versorgungsspannung, durch vorgegebene Adresswerte ersetzt werden, so dass keine fehlerhaften oder sinnlosen Programmaufrufe infolge fehlerhafter Daten erfolgen können.

Ferner ist vorteilhaft, eine Schnittstelle zur Übertragung aktualisierter Daten mit Adressen von Programmdaten in dem zweiten Speicher vorzusehen, so dass eine Aktualisierung der in dem zweiten Speicher abgelegten Daten sowie gegebenenfalls auch eine Aktualisierung der in dem ersten Speicher abgelegten Daten über die Schnittstelle erfolgen kann.

Ferner ist vorteilhaft, um besonders große Datensicherheit zu erhalten, den ersten Speicher dauerhaft unüberschreibbar auszuführen. Zwar ist ein Programmaustausch dann nur noch über den Austausch entsprechender Speicherbauteile möglich, jedoch können durch Spannungsstörungen auch keine Programmdaten verloren gehen.

Es ist insbesondere vorteilhaft, als Programmcode den Code für ein System zum Betrieb der Rechenvorrichtung vorzusehen, ein sogenanntes Betriebssystem, so dass von dem Betriebssystem aus andere Programme gestartet werden können. Denn das Betriebssystem wird bei jedem Rechnerstart benötigt, muss gegebenenfalls jedoch regelmäßig angepasst und überarbeitet werden.

Es ist weiterhin vorteilhaft, zusätzlich in dem zweiten Speicher Kontrolldaten und Versionsdaten abzulegen, so dass eine Integrität der Daten hierdurch kontrolliert werden kann sowie die Rechenvorrichtung erkennen kann, mit welcher Codeversion sie arbeitet.

### Zeichnung

Ausführungsbeispiele der Erfindung sind in der Zeichnung dargestellt und in der nachfolgenden Beschreibung näher erläutert.

Es zeigen
- Figur 1: ein Schema einer erfindungsgemäßen Rechenvorrichtung,
- Figur 2: ein erstes Ausführungsbeispiel für eine erfindungsgemäße Codezuordnung zwischen einem ersten und einem zweiten Speicher,
- Figur 3: eine zweite erfindungsgemäße Codezuordnung zwischen einem ersten und einem zweiten Speicher.

### Beschreibung des Ausführungsbeispiels

Die vorliegende Rechenvorrichtung kann für beliebige Anwendungen eingesetzt werden. Insbesondere ist sie jedoch vorteilhaft für Rechenvorrichtungen, für die nur ein begrenzter Einbauplatz zur Verfügung steht, zum Beispiel im Kraftfahrzeug. Die Anwendung im Kraftfahrzeug bringt ferner mit sich, dass die technische Entwicklung so schnell verläuft, dass innerhalb der Lebensdauer eines Kraftfahrzeugs mehrfach eine Anpassung des Programmcodes einer im Fahrzeug angeordneten Rechenvorrichtung sinnvoll sein kann. Es können zum Beispiel innerhalb der Lebensdauer des Fahrzeugs neue Funktionen entwickelt werden, die ein Benutzer nutzen möchte, ohne ein neues Gerät zu erwerben oder ein aufwändiges Update des ihm zur Verfügung stehenden Programmcodes durchführen zu wollen. Vor allem bei Multimediaanwendungen im Fahrzeug möchte ein Benutzer gegebenenfalls schnell neue Techniken und erweiterte Funktionen einsetzen. Im Folgenden wird die Erfindung am Beispiel einer allgemeinen Rechenvorrichtung erläutert, wobei jedoch die einzelnen Programmcodepakete zum Beispiel für ein Betriebssystem, für ein Navigationsprogramm zur Berechnung einer Fahrtroute anhand zusätzlich zur Verfügung zu stellender Kartendaten und/oder eine algorithmische Ablaufsteuerung eine Sprachein- und ausgabe stehen können.

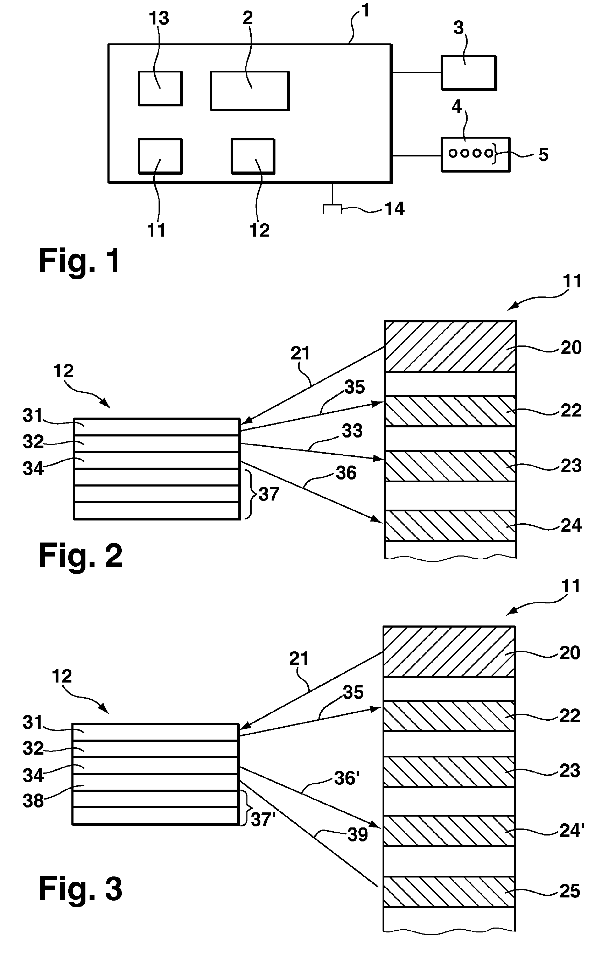

In der Figur 1 ist eine Rechenvorrichtung 1 mit einem Prozessor 2 dargestellt, wobei an die Rechenvorrichtung 1 eine Anzeigeeinheit 3 und eine Bedieneinheit 4 mit Tasten 5 angeschlossen ist. Von dem Prozessor 2 erzeugte Daten werden über die Anzeigeeinheit 3 ausgegeben, während über die Tasten 5 der Bedieneinheit 4 eine Steuerung der Rechenvorrichtung 1 erfolgt. Die Rechenvorrichtung 1 weist einen nichtflüchtigen und in einem bevorzugten Ausführungsbeispiel auch nicht überschreibbaren ersten Speicher 11 auf. Ferner ist ein zweiter, nichtflüchtiger Speicher 12 angeordnet, der vorzugsweise als ein sogenannter Flash-ROM (ReadOnlyMemory) ausgeführt ist. In einer weiteren Ausführungsform kann zusätzlich auch ein dritter Speicher 13 vorgesehen sein, der als ein flüchtiger Speicher ausgeführt ist. Die Rechenvorrichtung 1 weist ferner eine Schnittstelle 14 zum Datentransfer auf. Über die Schnittstelle 14 können Daten in den ersten Speicher 11 und/oder in den zweiten Speicher 12 geschrieben werden.

Der erste Speicher 11 ist als ein nichtflüchtiger Speicher ausgeführt. In einer bevorzugten Ausgestaltung kann der erste Speicher 11 auch aus einzelnen, einzeln austauschbaren Speicherblöcken bestehen. Der erste Speicher 11 ist zumindest teilweise über eine Steckverbindung mit der Rechenvorrichtung 1 verbunden und ist durch eine Entnahme aus der Steckverbindung aus der Rechenvorrichtung 1 herauslösbar, so dass Austauschteile in die Rechenvorrichtung 1 eingesetzt werden können. Für den Fall, dass auch der erste Speicher 11 überschreibbar ausgeführt ist, kann eine Aktualisierung von Daten über die Schnittstelle 14 zur Datenübertragung erfolgen. Der erste Speicher 11 dient zur Speicherung von Programmcode. Bei einem Einschalten der Rechenvorrichtung 1 wird an einer bestimmten Startadresse des ersten Speichers 11 mit der Abarbeitung des Programmcodes begonnen.

Auch der zweite Speicher 12 ist als ein nichtflüchtiger Speicher ausgeführt. In einer weiteren Ausführungsform kann der zweite Speicher 12 auch als ein flüchtiger Speicher ausgeführt sein, der über eine Spannungsversorgung gepuffert ist, so dass ohne Einwilligung des Benutzers keine Löschung des zweiten Speichers 12 erfolgt. Der dritte Speicher 13 ist als ein flüchtiger Arbeitsspeicher ausgeführt, auf den der Prozessor 2 unmittelbar zugreifen kann und der zur Zwischenspeicherung von Daten während der Bearbeitung durch den Prozessor 2 dient.

In der Figur 2 ist ein erstes Ausführungsbeispiel für eine Speicherbelegung des ersten Speichers 11 und des zweiten Speichers 12 dargestellt. Der erste Speicher 11 weist eine Coderegion 20 auf, mit deren Abarbeitung bei einem Einschalten der Rechenvorrichtung 1 begonnen wird und die somit als ein Startbereich für eine Abarbeitung dient. In einer bevorzugten Ausführungsform werden die Versionsdaten von dem Prozessor 2 überprüft, so dass bei der Abarbeitung sicher gestellt werden kann, dass der Speicherinhalt des zweiten Speichers 12 mit dem Speicherinhalt des ersten Speichers zusammenarbeiten kann. Sollte die Version nicht übereinstimmen, wird gegebenenfalls ein Abarbeiten des Programms abgebrochen.

Fest vorprogrammiert ist in dem Startbereich 20 ein erster Zeiger 21 vorgesehen, der auf einen ersten Eintrag in einem ersten Speicherfeld 31 in dem zweiten Speicher 12 verweist. Der erste Eintrag beinhaltet eine Speicheradresse 35 in dem ersten Speicher 11. In dem Startbereich 20 ist bevorzugt nur eine Startadresse für den zweiten Speicher 12 abgelegt. Weitere Adressen müssen in dem ersten Speicher 11 nicht abgelegt werden. Die Speicheradresse 35 verweist auf den Beginn eines ersten Programmcodeblocks 22 in dem ersten Speicher 11. Entsprechend dem Verweis auf den ersten Programmcodeblock 22 wird dieser in dem ersten Speicher 11 abgearbeitet. Der in dem ersten Programmcodeblock 22 abgelegte Programmcode wird unmittelbar von seiner Position in dem ersten Speicher 11 aus von dem Prozessor 2 ausgeführt. Entsprechendes gilt für nachfolgende Programmcodeblöcke. Anschließend wird die Programmabarbeitung an einer in einem zweiten Speicherfeld 32 des zweiten Speichers 12 angegebenen Speicheradresse 33 weitergeführt, die auf einen zweiten Programmcodeblock 23 in dem ersten Speicher 11 verweist. Die Abarbeitung springt nun auf den Beginn des zweiten Programmcodeblocks 23 in dem ersten Speicher 11. Anschließend wird die in einem dritten Speicherfeld 34 des zweiten Speichers 12 abgelegte Speicheradresse 36 eines dritten Programmcodepakets 24 aufgerufen. Die weiteren Speicherfelder 37 sind mit einem Vorgabewert belegt, der anzeigt, dass in diesen Speicherfeldern keine Adressdaten abgelegt sind. Bevorzugt wird ein Wert eingestellt, der ausgibt, dass ausgehend von den Speicherfeldern 37 keine Aktion erfolgen soll. Bevorzugt kann in ein Speicherfeld des zweiten Speichers 12 auch ein derart vorgesehener Wert eingetragen werden, der eine weitere Abarbeitung von in dem ersten Speicher 11 vorgesehenen Speicheradressen abbricht. Entweder kann im Anschluss die Rechenvorrichtung 1 ausgeschaltet werden, oder der Prozessor 2 wird auf die Abarbeitung von an anderer Stelle gespeicherten Programmen verwiesen, auf die die Rechenvorrichtung 1 zugreifen kann.

Bei der Abarbeitung der Speicheradressen ist vorzugsweise eine Abfrage vorgesehen, die sicherstellt, dass es sich bei den in dem zweiten Speicher abgelegten Adressen auch tatsächlich um gültige Startadressen des ersten Speichers 11 handelt, sodass eine Abarbeitung bei einer ungültigen Speicheradresse unterbrochen wird und in einer bevorzugten Ausführungsform einer Fehlermeldung ausgegeben wird. Gegebenenfalls sind hierzu zusätzlich Kontrolldaten gespeichert, wobei eine Untersuchung der Kontrolldaten zu den abgelegten Speicheradressen eine Aussage über die Gültigkeit der jeweiligen abgelegten Adressen möglich macht. Die in dem zweiten Speicher 12 abgelegten Daten sind dabei vorzugsweise in Tabellenform gespeichert, wobei ergänzende Daten in weiteren Tabelleneinträgen hinzugefügt werden können.

Der erste Speicher 11 ist in einem ersten Ausführungsbeispiel als ein einziger Speicherblock ausgeführt. Jedoch ist es auch möglich, einen oder mehrere der Programmcodeblöcke in verschiedenen einzelnen Speicherbausteinen zusammenzufassen. So können zum Beispiel der Startbereich 20 und der erste Programmcodeblock 22, der zum Beispiel ein Betriebssystem für die Rechenvorrichtung 1 darstellt, in einer Speichereinheit zusammengefasst sein, während der zweite Programmcodeblock 23 und der dritte Programmcodeblock 24 jeweils in eigenen, zusätzlich anbringbaren Gehäusen vorgesehen sind.

In der Figur 3 ist der erste Speicher 11 und der zweite Speicher 12 nach einer Aktualisierung des gespeicherten Programmcodes dargestellt. Der Startbereich 20, der erste Zeiger 21 auf das erste Speicherfeld 31 des zweiten Speichers 12, der Zeiger mit der Speicheradresse 35 auf den ersten Programmcodeblock 22 und der erste Programmcodeblock 22 selbst sind unverändert geblieben. Der Eintrag in dem zweiten Speicherfeld 32 des zweiten Speichers 12 ist jedoch gelöscht worden bzw. wurde auf einen vorgegebenen Leerwert gesetzt. Damit wurde der Zeiger auf die Speicheradresse 33 auf den zweiten Programmcodeblock 23 gelöscht. Der zweite Programmcodeblock 23 ist nach wie vor in dem ersten Speicher 11 vorhanden, wird jedoch bei einem Ausführen des Programms nicht mehr abgearbeitet. Der Eintrag in dem dritten Speicherfeld 34 mit einem Zeiger auf einen dritten Codeblock hat sich verändert. So zeigt ein Zeiger mit einer veränderten Startadresse 36' nun auf einen dritten Programmcodeblock 24', der sich auch in seiner Größe verändert hat. Ferner wurde in ein viertes Speicherfeld 38 eine weitere Speicheradresse 39 mit einem Zeiger eingetragen, der auf einen in dem ersten Speicher 11 ergänzten, weiteren vierten Programmcodeblock 25 zeigt. Weitere leere Speicherfelder 37' erlauben bei dem hier gewählten Ausführungsbeispiel noch das Zufügen von zwei weiteren Startadressen in dem ersten Speicher 11. Die Größe des zweiten Speichers 12 kann dabei beliebig nach den entsprechenden Benutzervorgaben gewählt werden, so dass auch auf noch mehr oder auf weniger Codebereiche verwiesen werden kann.

Die anhand der Figur 3 gezeigten Operationen erlauben somit, das logische Löschen einzelner Speicherbereiche, ohne diese in dem ersten Speicher 11 tatsächlich physikalisch zu löschen, das Neuhinzufügen weiterer Programmdatenblöcke bzw. auch eine Änderung von Größe und/oder Position eines Programmdatenblocks in dem ersten Speicher 11. Die weiteren, gemäß den Figuren 2 und 3 nicht belegten Speicherbereiche in dem ersten Speicher 11 können beliebig für weitere Daten und Parameter verwendet werden bzw. als Reservebereiche in dem ersten Speicher 11 freigelassen werden.

## Patentansprüche

1. Rechenvorrichtung mit einem ersten, nichtflüchtigen Speicher (11) zur Speicherung von Programmcode, mit einem Prozessor (2) zur Ausführung des Programmcodes des ersten Speichers (11) derart, dass der Programmcode unmittelbar von dem ersten Speicher (11) aus ausgeführt wird, **dadurch gekennzeichnet, dass** ein zweiter, nichtflüchtiger Speicher (12) zum Speichern von Speicheradressen (33, 35, 36, 36', 39) des Programmcodes (22, 23, 24, 25) in dem ersten Speicher (11) vorgesehen ist.

2. Rechenvorrichtung nach einem der vorherigen Ansprüche, **dadurch gekennzeichnet, dass** eine Reihenfolge der Abarbeitung des Programmcodes durch eine Reihenfolge der in dem zweiten Speicher (12) abgelegten Speicheradressen (33, 35, 36, 36', 39) des Programmcodes in dem ersten Speicher (11) vorgegeben ist.

3. Rechenvorrichtung nach einem der vorherigen Ansprüche, **dadurch gekennzeichnet, dass** der Programmcode in einzelnen Codepaketen in dem ersten Speicher (11) abgelegt ist.

4. Rechenvorrichtung nach Anspruch 3, **dadurch gekennzeichnet, dass** durch ein Setzen einer Speicheradresse in dem zweiten Speicher (12) auf einen vorgegebenen Wert ein Ausführen eines Codeabschnittes des Programmcodes in dem ersten Speicher (11) unterbleibt.

5. Rechenvorrichtung nach einem der vorherigen Ansprüche, **dadurch gekennzeichnet, dass** der erste Speicher (11) austauschbar in der Rechenvorrichtung (1) angeordnet ist.

6. Rechenvorrichtung nach Anspruch 5, **dadurch gekennzeichnet, dass** der erste Speicher (11) aus mehreren Speicherbausteinen besteht, die einzeln austauschbar sind.

7. Rechenvorrichtung nach einem der vorherigen Ansprüche, **dadurch gekennzeichnet, dass** die Speicherfelder des zweiten Speichers (12) bei einem Datenverlust einen vorgegebenen Wert annehmen, um den Datenverlust anzuzeigen.

8. Rechenvorrichtung nach einem der vorherigen Ansprüche, **gekennzeichnet durch** eine Schnittstelle (14) zur Übertragung aktualisierter Daten mit Adressen des Programmcodes in den zweiten Speicher (12).

9. Rechenvorrichtung nach einem der vorherigen Ansprüche, **dadurch gekennzeichnet, dass** ein dritter Speicher als ein flüchtiger Arbeitsspeicher (13) vorgesehen ist.

10. Rechenvorrichtung nach einem der vorherigen Ansprüche, **dadurch gekennzeichnet, dass** der erste Speicher (11) dauerhaft unüberschreibbar ausgeführt ist.

11. Rechenvorrichtung nach einem der vorherigen Ansprüche, **dadurch gekennzeichnet, dass** der Programmcode für ein System zum Betrieb der Rechenvorrichtung (1) und zur Steuerung der Durchführung von Anwenderprogrammen verwendet wird.

12. Rechenvorrichtung nach einem der vorherigen Ansprüche, **dadurch gekennzeichnet, dass** in dem zweiten Speicher (12) Kontrolldaten zur Überprüfung der Gültigkeit des in dem zweiten Speicher (12) abgelegten Codes und/oder Versionsdaten zur Überprüfung der Version der in dem zweiten Speicher (12) abgelegten Speicheradressen gespeichert sind.
